# EUROPEAN PATENT APPLICATION

(11) **EP 4 779 135 A1**
(43) Date of publication of application: **22.07.2026**
(21) Application number: 25223748.2
(22) Date of filing: 16.12.2025
(51) Int. Cl.: F02C 3/22, F02C 7/22, F02C 7/236, F04D 5/00, F04D 25/16

(54) **FUEL SYSTEM**

(30) Priority: 17.01.2025 GB 202500677
(71) Applicant: Rolls-Royce plc, London N1 9FX (GB)
(72) Inventor: Yates, Martin, Derby, DE24 8BJ (GB); Aly, Mohamed, Derby, DE24 8BJ (GB)
(74) Representative: Rolls-Royce plc

(57) **Abstract**

A fuel system for a gas turbine engine (103) is disclosed. The fuel system is configured to combust hydrogen fuel and comprises a fuel conduit (228), a first fuel pump (226) configured to operate on liquid hydrogen within the fuel conduit (228) and a second fuel pump (230) downstream in hydrogen fuel flow of the first fuel pump (226). The first fuel pump comprises one of a side channel and a regenerative pump (226) and the second fuel pump comprises a centrifugal pump (230). Methods of operation, a gas turbine engine comprising the fuel system, and an aircraft comprising the gas turbine engine are also disclosed.

## Description

### TECHNICAL FIELD

This disclosure relates to a fuel system for a cryogenically fuelled gas turbine engine, a gas turbine engine including such a fuel system, aircraft comprising such engines, and methods of controlling such fuel systems and engines.

### BACKGROUND

Cryogenically fuelled aircraft have been proposed, in which a fuel which is gaseous at standard room temperature and pressure is stored in the form of a liquid, in order to improve density of the fuel. Examples include methane, ammonia and hydrogen. However, pumping the fuel at the necessary temperature, pressure and flow rate required by the engine is challenging.

### SUMMARY

In a first aspect, there is provided a fuel system for a gas turbine engine configured to combust cryogenic fuel, the fuel system comprising:
a fuel conduit;
a first fuel pump configured to operate on liquid cryogenic fuel within the fuel conduit;
a second fuel pump downstream in fuel flow of the first fuel pump and configured to operate on liquid hydrogen within the fuel conduit; wherein
the first fuel pump comprises one of a regenerative pump and a side-channel pump, and the second fuel pump comprises a centrifugal pump.

Advantageously, the fuel system comprises one of a side-channel pump and a regenerative pump as a first pumping stage. Such pumps are sometimes also known as vortex or peripheral pumps. Both side-channel and regenerative pumps have been found to be tolerant to mixed phase flows comprising liquid and gaseous and / or supercritical fluids, which allows for a higher pressure rise and / or a lower tank pressure in use, and may also be self-priming. Accordingly, a lower overall fuel system weight can be achieved.

The fuel system may comprise a cryogenic fuel tank which may be configured to store cryogenic fuel in a liquid phase. The cryogenic fuel tank may be configured to store hydrogen as a liquid at a temperature of less than 33 Kelvin (K) and may be configured to store hydrogen at a temperature less than 25K and may be configured to store hydrogen at a pressure of between 1 and 4 Bar.

Advantageously, in view of the provision of a side-channel pump or a regenerative pump tolerant to mixed phase flow, the hydrogen fuel tank can be configured to operate at a relatively low pressure. This may simplify the fuel system, may reduce a need for fuel pressurisation systems, and may also allow for a lighter tank.

The first fuel pump may be located within the cryogenic fuel tank. Accordingly, mixed flow within the cryogenic tank can be tolerated by the first pump.

The first fuel pump may comprise a housing containing a bladed impellor configured to rotate about an axis and defining a pump chamber between adjacent blades. In embodiments where the first pump comprises a regenerative pump, the impellor may comprise first and second rows of blades, axially spaced by a separator disc. The housing may define a peripheral channel provided at each axial face of the impellor extending between each axial side of the impellor and around the periphery of the impellor, such that fluid communication is provided between the pump chambers of each side of the impellor. The housing may define circumferentially spaced intake and discharge ports..

The first pump may comprise a plurality of pump stages, each pump stage comprising one of a side-channel and a regenerative pump. Accordingly, a high-pressure rise can be obtained prior to provision of fuel to the centrifugal pump.

The first pump may be configured to pump the cryogenic fuel to a pressure and temperature such that the cryogenic fuel at an inlet to the second pump is substantially wholly in a liquid phase.

The fuel system may comprise a first electric motor configured to drive the first pump and may comprise a second electric motor configured to drive the second pump.

In a second aspect there is provided a gas turbine engine comprising the fuel system of the first aspect.

In a third aspect there is provided an aircraft comprising a gas turbine engine of the second aspect.

In a fourth aspect, there is provided a method of operating a fuel system of the first aspect, the method comprising:
providing mixed liquid and gaseous cryogenic fuel at an inlet to the first fuel pump;
pumping the mixed liquid and gaseous cryogenic fuel to provide fuel to an inlet of the second pump; wherein
the first pump is operated such that fuel at the inlet of the second pump is substantially wholly liquid.

### BRIEF DESCRIPTION OF THE DRAWINGS

An embodiment will now be described by way of example only with reference to the accompanying drawings, which are purely schematic and not to scale, and in which:
Figure 1 shows an airliner comprising a hydrogen powered gas turbine engine;
Figure 2 shows a fuel system and gas turbine engine of Figure 1;
Figure 3 shows a perspective view of a first pump of the fuel system of figure 2, comprising a regenerative pump;
Figure 4 shows a perspective view of a first pump of the fuel system of figure 2 showing a side-channel pump; and

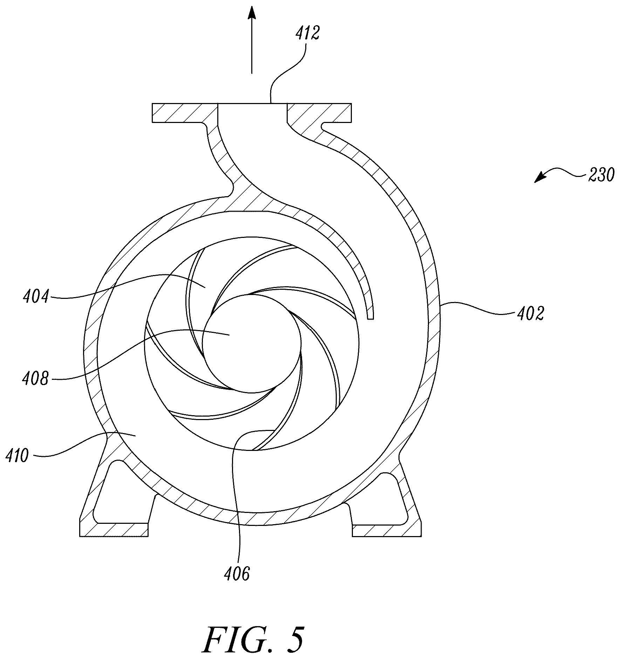

Figure 5 shows a side view of a second pump of the fuel system of figure 2.

### DETAILED DESCRIPTION

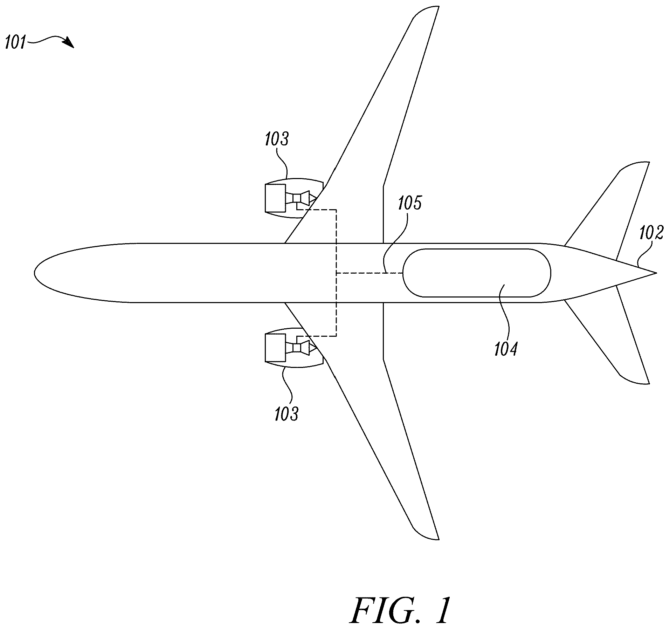

A cryogenic hydrogen fuelled airliner is illustrated in Figure 1. As will be understood, alternative cryogenic fuels could be employed such as liquid methane or ammonia. In this example, the airliner 101 is of substantially conventional tube-and-wing twinjet configuration with a central fuselage 102 and substantially identical engines 103 which are mounted in an underwing configuration.

A cryogenic fuel storage system comprising a hydrogen fuel tank 104 is located in the fuselage 102 and / or the wings and is connected to the engines 103 via a fuel delivery system 105.

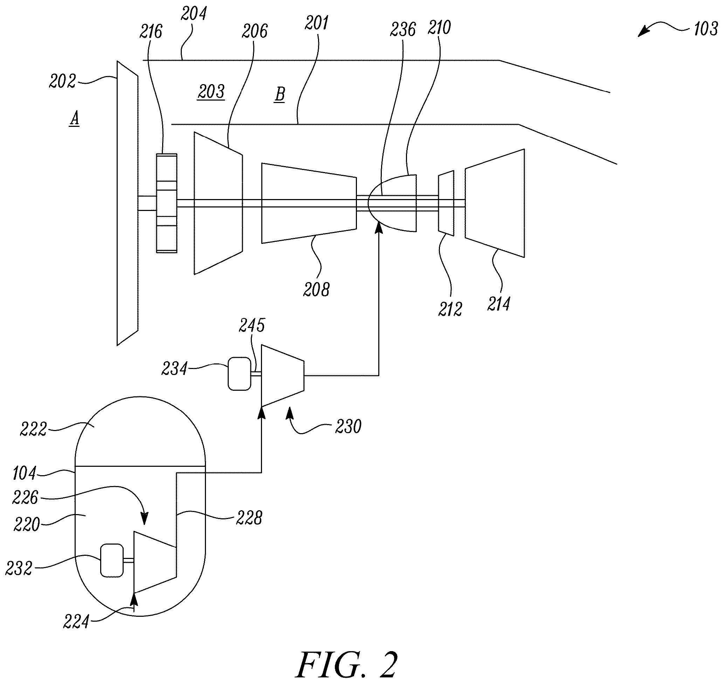

A block diagram of one of the fuel delivery systems 105 and one of the engines 103 is shown in figure 2.

The cryogenic fuel is hydrogen stored at least in part as a liquid, below its boiling point. As will be understood, when the tank is not completely full, an "ullage" space will be provided within the tank. This ullage space is delineated by a liquid / vapour line 218, with a liquid hydrogen portion 220 settling at the bottom of the tank 104, and the vapour portion 222 floating on top. Depending on the pressure and temperature within the tank, this vapour portion may comprise a gaseous phase, or a supercritical phase, or a mixture of the two. In practice however, sloshing of hydrogen and bubbles in the liquid during use can result in one or a mixture of liquid and gas / supercritical fluid occurring in any region of the tank 104.

In order to maintain the liquid hydrogen in a liquid state, it may be necessary to pressurise the hydrogen tank 104 and insulate it to ensure sufficiently low temperature and high pressure is maintained to prevent vaporisation of the tank contents. In a specific embodiment, the cryogenic fuel storage system 104 is configured to store the hydrogen fuel at 25 kelvin. In the present embodiment, the hydrogen fuel is pressurised to a pressure from 1 to 3 bar, and in a specific example, 2 bar. It will be appreciated that the principles of the present invention may be extended to hydrogen fuel stored at higher pressures and / or temperatures.

In the present embodiment, the engine 103 is a turbofan comprising a ducted fan 202 located in a nacelle 204. The fan 202 receives intake air A and generates two airflows: a bypass flow B which passes axially through a bypass duct 203 and a core flow C which enters the gas turbine core 201.

The gas turbine core 201 comprises, in axial flow series, a low-pressure compressor 206, a high-pressure compressor 208, a combustor 210, a high-pressure turbine 212, and a low-pressure turbine 214.

In operation, the core flow C is compressed by the low-pressure compressor 206 and is then directed into the high-pressure compressor 208 where further compression takes place. The compressed air exhausted from the high-pressure compressor 208 is directed into the combustor 210 where it is mixed with fuel and the mixture is combusted.

Following combustion, the resultant hot combustion products are discharged from the combustor 210 and expand through, and thereby drive, the high-pressure turbine 212 and in turn the low-pressure turbine 214.

The fan 202 is driven by the low-pressure turbine 214 via a reduction gearbox 216. In the present embodiment, the reduction gearbox 216 takes the form of an epicyclic gearbox. In alternative arrangement, the gearbox may be omitted and the engine 103 configured as a direct-drive engine, either in a two-spool or three-spool arrangement.

Turning now to the hydrogen fuel flow, hydrogen fuel from the hydrogen storage tank 104 is pumped from a fuel pickup tube 224 to a first fuel pump 226 via a main fuel conduit 228.

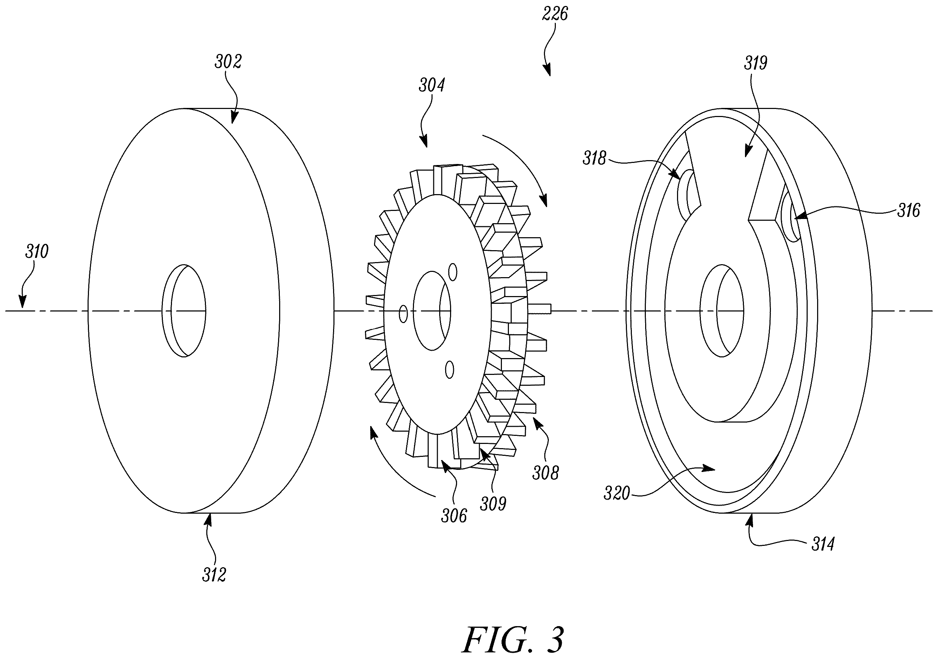

The first fuel pump is in the form of a regenerative pump 226, and is shown in further detail in figure 3.

The regenerative pump 226 (also known as a peripheral, turbine or vortex pump) has the characteristics of a positive displacement pump, and may comprise one or more stages, one of which is shown in figure 3.

As shown in figure 3, each stage comprises a housing 302, within which an impellor 304 is provided. The impellor 304 has a plurality of radially projecting blades 306, which define a plurality of chambers 308 therebetween.

The impellor 304 also comprises a separator disc 309, which separates the impellor into two axial halves. Accordingly, first and second rows 310, 312 of radially extending blades are provided, which are axially separated by the separator disc 309.

A radial gap is defined between tips of each blade 306 and the housing 302. The impellor 304 is configured to be rotated by a shaft (not shown), which defines an axis 310.

The housing 302 comprises front and rear housings 312, 314. The second housing 314 defines inlet and outlet ports 316, 318 which are spaced circumferentially around the housing 302. A projection 319 in the second housing 314 between the two ports 316, 318 provides a barrier which prevents backflow from the outlet 318 to the inlet 316. A peripheral channel 320 is defined by the housing 302, provided in the front and rear housings 314, 316.

The peripheral channel 320 extends circumferentially around the housing 302 (as shown in figure 3a) radially outwardly of the gap formed between the tips of the blades 306 and the housing 302, and also provides an axial gap between front and rear axial faces of the impellor blades 306. The channel 320 is in direct fluid communication with the inlet 316, the outlet 318 and the chambers 308.

In operation, the impellor is rotated such that fluid is driven from the inlet 316 into the chambers 308, then into the gap 307 and into the channel 320, before being directed into the next chamber 308. Eventually, the fluid is directed out of the outlet 318, and the cycle begins again. This generally helical flow of fluid imparts energy from the blades to the fluid, thereby raising its pressure. This can be distinguished from the operation of a centrifugal impellor, as the energy is imparted to the flow by the repeated interaction of the fluid with adjacent impellor blades 306, with the fluid switching between the channel 320 and the chambers 308. Additionally, in a centrifugal impellor, fluid flow spirals outwardly from a central inlet to an outlet spaced radially from the inlet. In contrast, in the peripheral pump, the inlet and outlet 316, 318 may be located at the same radial position.

It should be noted that, where the pumped hydrogen fluid is a mixed phase fluid comprising gas and liquid, the liquid phase is driven to the periphery of the housing, while the gas is kept within the radially inner part, with the liquid hydrogen forming a "liquid ring" around the periphery of the impellor. This helps seal the pump and prevents gas from leaking from the high pressure side back to the low pressure side. As the pressure increases through the pump (and potentially through multiple regenerative pump stages), the quantity of vapour is reduced provided the temperature of the fluid is maintained below its critical temperature (approximately 33K).

The inventors have found that such a pump is capable of providing high pressure ratios in a single stage, while providing relatively low flow rates, and tolerating mixed phase flow. Additionally, such a pump is capable of providing high pressure ratios at relatively low rotational speeds. Accordingly, bearing life can be considerably increased. Such a benefit may be substantial in a cryogenic pumping system, in view of the difficult in lubricating low temperature bearings. Such a pump is therefore a suitable candidate for a first stage of a liquid hydrogen pumping system.

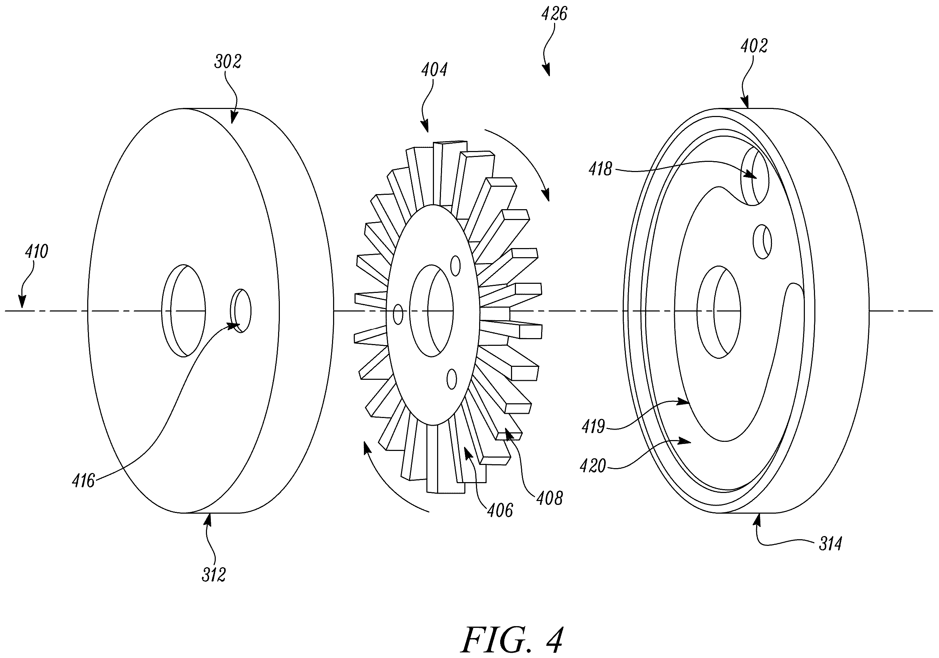

Figure 4 shows an alternative first pump 426 in the form of a side-channel pump 426.

The side-channel pump 426 operates in a similar manner to the regenerative pump 226, and like that pump also has the characteristics of a positive displacement pump, and may comprise one or more stages.

As shown in figure 4, each stage comprises a housing 402, within which an impellor 404 is provided. The impellor 404 has a plurality of radially projecting blades 406, which define a plurality of chambers 308 therebetween.

Unlike the impellor 306 of the regenerative pump, the impeller 406 does not include a separator disc, and as such, fluid is free to flow from one axial face of the impellor to the other.

A radial gap is defined between tips of each blade 406 and the housing 402. The impellor 404 is configured to be rotated by a shaft (not shown), which defines an axis 410.

The housing 402 comprises front and rear halves housings 412, 414, which respectively define inlet and outlet ports 416, 418 which are spaced circumferentially around the housing 402. A projection 419 in the second housing 414 between the two ports 416, 418 provides a barrier which prevents backflow from the outlet 318 to the inlet 316. A side-channel 420 is defined by the housing 402, provided in the front and rear half housings 414, 416 in this embodiment.

The side-channel 320 extends circumferentially around the housing 402 defining an axial gap between front and rear axial faces of the impellor blades 406. The channel 420 is in direct fluid communication with the inlet 316, the outlet 318 and the chambers 308. The channel increases in cross-sectional area from the inlet 416 to the outlet 418, such that the channel acts as a diffuser, to thereby provide a pressure rise in fluid within the channel.

In operation, the impellor 404 is rotated such that fluid is driven from the inlet 416 into the chambers 408 and into the side channel 420, before being directed into the next chamber 408. Eventually, the fluid is directed out of the outlet 418, and the cycle begins again. This generally helical flow of fluid imparts energy from the blades to the fluid, thereby raising its pressure.

However, both the regenerative and the side-channel pump types may be relatively inefficient compared to other pump designs. This is a particular problem when pumping liquid hydrogen, as any inefficiency results in the addition of heat to the fluid being pumped. If the hydrogen exceeds the critical temperature (33 Kelvin), the hydrogen will boil irrespective of pressure. Further pumping of the gaseous hydrogen will then be problematic, as the gaseous hydrogen is compressible, and additional pumping work is therefore required to pump the hydrogen to higher pressures.

Accordingly, the first pump 226 is configured to raise the pressure of hydrogen within the hydrogen fuel conduit 228 to a pressure and a temperature such that hydrogen at the outlet of the first pump 226 is provided in substantially wholly a liquid phase, for example with less than 5% gaseous hydrogen present, or less than 1% gaseous hydrogen present. Accordingly, a second pumping stage can be used which may have a higher efficiency, but a lower capability for pumping mixed flow.

Consequently, a second pump 230 is provided having a different pump architecture.

The second pump comprises a centrifugal pump 230, and is illustrated in further detail in figure 4. The second pump comprises a pump housing 402, within which an impellor 404 is provided. The impellor 404 is configured to rotate, and comprises a plurality of vanes 406 configured to urge fluid from an inlet 408 provided at a radially inner portion to a radially outer outlet scroll 410 defined by the housing 402, to an outlet 412 provided at a radially outer portion. In this pump, no peripheral channel is provided, with fluid flowing from the radially inner inlet 408, radially outwardly between each blade, to the radially outer outlet 412. Accordingly, hydrogen fluid is driven and raised in pressure from the inlet 408 to the outlet 412 in an efficient manner, with minimal temperature increase.

Though the centrifugal pump is relatively efficient, it is generally incapable of handing mixed flows, due to the imbalanced forces that occur on the high-speed impellor where variations in density occur within the pumped fluid. Furthermore, a relatively large number of stages may be required in order to obtain a required working pressure and flow rate. Accordingly, the provision of the regenerative pump 226 or side-channel pump 426 upstream in hydrogen fuel flow of the centrifugal pump 230 allows both pumps to work to their respective strengths.

As such, the present disclosure provides a fuel system which is highly efficient, can handle mixed fluid flow, and maintains liquid phase fluid within the pumping stages, to thereby minimise pumping work.

Each of the pumps 226, 230 must be driven in use to provide pumping work. Typically, the centrifugal pump 230 must be operated at a higher speed than the regenerative / side-channel pump 226, 426, and as such, separate drive shafts are provided. Returning now to figure 2, first and second electric motors 232, 234 are provided to drive the regenerative / side-channel and centrifugal pumps 226, 426, 230. Accordingly, independent speed control can be provided to each of these pumps to provide pressure and fuel flow control.

Controlling a hydrogen fuel system is challenging in view of the large variance in pressure and flow requirements during typical operation. As will be appreciated, aircraft propulsion systems must be operated at a large variance of required thrust levels and altitudes. Fuel must be delivered to the combustor 206 at a pressure greater than the core compressor 208 outlet pressure (P30), with sufficient pressure margin to maintain adequate fuel mixing in the combustor 236. Accordingly, a maximum fuel flow rate and pressure at maximum take-off power and sea level altitude may be up to 20 times higher than a minimum pressure and rate at engine idle at high altitude.

Accordingly, the system requires a high "turn-down ratio", being capable of both high volume, high pressure flow, and lower volume, lower pressure flow.

The present system achieves this without a need for additional valves or bypass channels, which be difficult to realise in the cold conditions in the fuel system. In the present system, at low flow conditions, the system is operated in a first operating mode, in which the first pump 226 can be operated without operating the second pump 230. Liquid hydrogen will continue to flow through both pumps 226, 230, but with only the first pump operating on the fluid to raise its pressure. Since the regenerative pump is less sensitive to stall, it can be operated efficiently at much lower flow rates and pressures. Additionally, the side-channel pump 426 may be self-priming, allowing it to operate on gaseous / supercritical flow at start. At higher flow and / or pressure requirements, the system is operated in a second operating mode, in which second pump 230 is operated to efficiently provide the higher flow rate. In at least the second operating mode, the first pump 226 is operated such that substantially only liquid hydrogen is provided at the inlet to the second pump 230, such that the second pump 230 can operate at high speed, and provide a required pressure rise.

In some cases, the second pump may be operated at low speed during low-pressure and flow operation such that the rotation rate substantially matches the flow rate of fluid therethrough, to avoid the pump operating as a turbine, thereby adding to turbulence in the flow. In the first operating mode, it may be acceptable to operate the first pump 226 such that some gaseous hydrogen is provided at the outlet, since the second pump 230 is not required to operate on the fluid, and so a stall condition may be acceptable under such circumstances.

Alternative embodiments can be envisaged. For example, as noted, additional regenerative / side-channel or centrifugal pumping stages could be provided, either in series to provide additional pressure rise, or in parallel to provide additional flow. Additional pump types could also be added, such as reciprocating pumps. The first pump could be provided in a different location, for example outside of the fuel tank. Alternatively, both fuel pumps could be located within the tank. The fuel system may comprise additional equipment. For example, the system may comprise a heater downstream of the pumps 226, 230 configured to vaporise the hydrogen for provision to the combustor 236.

## Claims

1. A fuel system for a gas turbine engine (103) configured to combust cryogenic fuel, the fuel system comprising:
a fuel conduit (228);
a first fuel pump (226) configured to operate on liquid cryogenic fuel within the fuel conduit (228);
a second fuel pump (230) downstream in fuel flow of the first fuel pump (226); wherein
the first fuel pump comprises one of a regenerative pump (226) and a side channel pump (426) and the second fuel pump comprises a centrifugal pump (230).

2. A fuel system according to claim 1, wherein the fuel system comprises a cryogenic fuel tank (104) which may be configured to store hydrogen fuel in a liquid phase.

3. A fuel system according to claim 2, wherein the cryogenic fuel tank (104) is configured to store hydrogen as a liquid at a temperature of less than 30 Kelvin (K) and may be configured to store hydrogen at a temperature less than 25K and may be configured to store hydrogen at a pressure of between 1 and 4 Bar.

4. A fuel system according to any of the preceding claims, wherein the first fuel pump (226) is located within the cryogenic fuel tank (104).

5. A fuel system according to any of the preceding claims, wherein the first fuel pump (226) comprises a housing (302) containing a bladed impellor (304) configured to rotate about an axis and defining pump chambers (308) between adjacent blades (306).

6. A fuel system according to claim 5, wherein the impellor (304) comprises first and second rows of blades (306), axially spaced by a separator disc (309).

7. A fuel system according to claim 5 or claim 6, wherein the housing (302) defines a peripheral channel (320) provided at each axial face of the impellor (304) extending between each axial side of the impellor (304) and around the periphery of the impellor (304), such that fluid communication is provided between the pump chambers (308) of each side of the impellor (304).

8. A fuel system according to claim 6, wherein the housing (302) defines circumferentially spaced intake and discharge ports (316, 318).

9. A fuel system according to any of the preceding claims, wherein the first pump (226) comprises a plurality of pump stages, each pump stage comprising a side-channel pump (226).

10. A fuel system according to any of the preceding claims, wherein the first pump (226) is configured to pump the fuel to a pressure and temperature such that the fuel at an inlet to the second pump (230) is substantially wholly in a liquid phase.

11. A fuel system according to any of the preceding claims, wherein the fuel system comprises a first electric motor (232) configured to drive the first pump (226) and may comprise a second electric motor (234) configured to drive the second pump (230).

12. A gas turbine engine (103) comprising a fuel system according to any of the preceding claims.

13. An aircraft (101) comprising a gas turbine engine (103) according to claim 12.

14. A method of operating a fuel system of any of claims 1 to 11, the method comprising:
providing mixed liquid and gaseous cryogenic fuel at an inlet to the first fuel pump (226);
pumping the mixed liquid and gaseous cryogenic fuel to provide fuel to an inlet of the second pump (230); wherein
the first pump (226) is operated such that fuel at the inlet of the second pump (230) is substantially wholly liquid.
